# EUROPÄISCHE PATENTANMELDUNG

(11) **EP 4 736 985 A1**
(43) Veröffentlichungstag der Anmeldung: **06.05.2026**
(21) Anmeldenummer: 25210703.2
(22) Anmeldetag: 23.10.2025
(51) Int. Cl.: B01D 29/56, B01D 5/00, B01D 17/04, B01D 36/00, B01D 45/04

(54) **VORRICHTUNG FÜR GASFÖRMIGE PROZESSFLUIDE MIT WÄRMETAUSCHER UND KOALEZENSFILTER**

(30) Priorität: 29.10.2024 DE 102024003559
(71) Anmelder: FUNKE Wärmeaustauscher Apparatebau GmbH, 31028 Gronau/Leine (DE); Hydac Filtertechnik GmbH, 66280 Sulzbach/Saar (DE)
(72) Erfinder: Schmitz, Andreas, 66459 Kirkel (DE); Schöneberger, Alex Manfred, 66359 Bous (DE); Kögel, Michael, 68542 Heddesheim (DE); Graw, Anselm Tobias, 30459 Hannover (DE)
(74) Vertreter: Bartels und Partner, Patentanwälte

(57) **Zusammenfassung**

2. Vorrichtung zur Behandlung von gashaltigen oder gasförmigen Prozessfluiden, die nach ihrer Verdichtung einer Wärmetauscheinrichtung, wie einer Kühleinrichtung (10), zugeführt werden, die das jeweilige Prozessfluid zumindest teilweise in eine flüssige Phase überführt und mit einer sich in Strömungsrichtung des Fluids gesehen anschließenden Abscheideeinrichtung (12), die die flüssige Phase aus dem Prozessfluid derart entfernt, dass eine gasförmige Phase verbleibt, dadurch gekennzeichnet, dass die Wärmetauscheinrichtung (10) und die Abscheideeinrichtung (12) gemeinsam in einem Vorrichtungsgehäuse (14) in der Art eines Druckbehälters angeordnet sind, das voneinander getrennte Anschlussstellen aufweist für die
- Zufuhr (16) des gashaltigen Prozessfluids,
- Abfuhr (18) der gasförmigen Phase,
- Abfuhr (20) der flüssigen Phase sowie
- Zu- und Abfuhr (22) eines Wärmetauschmediums für die Wärmetauscheinrichtung.

## Beschreibung

Die Erfindung betrifft eine Vorrichtung zur Behandlung von gashaltigen oder gasförmigen Prozessfluiden, die nach ihrer Verdichtung einer Wärmetauscheinrichtung, wie einer Kühleinrichtung, zugeführt werden, die das jeweilige Prozessfluid zumindest teilweise in eine flüssige Phase überführt und mit einer sich in Strömungsrichtung des Fluids gesehen anschließenden Abscheideeinrichtung, die die flüssige Phase aus dem Prozessfluid derart entfernt, dass eine gasförmige Phase verbleibt.

Durch DE 10 2018 004 096 A1 ist eine Phasentrennvorrichtung bekannt, mit einem zumindest ein Koaleszenzelement aufnehmenden Vorrichtungsgehäuse, zumindest bestehend aus
- einem Einlass für die Zufuhr einer Emulsion, die das jeweilige Koaleszenzelement zum Auftrennen in mindestens zwei seiner Bestandteile durchströmt,
- einem Auslass für einen abgetrennten Bestandteil, und
- einem weiteren Auslass für einen weiteren abgetrennten Bestandteil, der mit einer geringeren Dichte gegenüber dem einen Bestandteil auf diesem aufschwimmt.

Dadurch ist im gleichen Vorrichtungsgehäuse eine Kombination aus Koaleszenz- und Schwerkraftabscheider realisiert, so dass neben einer hohen Effizienz der Abscheiderate, die aufgetrennten Bestandteile vollständig voneinander entmischt austragbar sind.

Durch DE 10 2014 012 094 A1 ist eine Vorrichtung zur Behandlung von gashaltigen Prozessfluiden respektive Fluidgemischen bekannt, die Gase, wie insbesondere Wasserstoff, Luft, Stickstoff oder Erdgas, sowie Flüssigkeiten, wie insbesondere ionische Flüssigkeiten, Hydrauliköle oder Prozesswässer, enthalten, mit mindestens einer ersten Abscheidestufe zum Auftrennen des Prozessfluides in eine flüssige und eine gasförmige Phase, die mit einem verbleibenden Flüssigkeitsanteil versetzt respektive verunreinigt ist, der in mindestens einer weiteren Abscheidestufe aus dem Prozessgas abschließend entfernt wird.

Wasserstoff wird in neuerer Zeit zusehends an Tankstellen für wasserstoffbetriebene Fahrzeuge mit hohem Druck von ca. 700 bar bis 1000 bar für eine Tankentnahme bereitgehalten. Mit Vorteil werden zur Verdichtung des Wasserstoffgases sogenannte lonenverdichter eingesetzt, wobei es sich um einen Verdichter ähnlich einem Kolbenverdichter handelt, der jedoch anstelle eines Kolbens eine ionische Flüssigkeitssäule für die Verdichtung nutzt. Die als Verdrängerelement wirkende Flüssigkeit hat gegenüber einem Verdrängerkolben den Vorteil, dass sie die entstehende Wärme besser ableiten kann, da sie zu einem gewissen Anteil mit dem komprimierten Gas aus dem Verdichter gefördert wird. Bei den ionischen Flüssigkeiten handelt es sich bekanntermaßen um organische Salze, die bei Temperaturen unter 100°C flüssig sind, ohne dass das Salz dabei in einem Lösungsmittel, wie Wasser, gelöst ist. Bei dem hohen Druckniveau kommt es beim Betrieb der ionischen Verdichter zu einem Eintrag von Flüssigkeitsanteilen in Form einer flüssigen Phase in deren gasförmige Phase. Dieser Eintrag wird fachsprachlich auch als Verschleppung bezeichnet und macht grundsätzlich eine weitere Behandlung des gashaltigen Prozessfluides erforderlich.

Dadurch, dass gemäß der vorstehend genannten, bekannten Vorrichtungslösung der Trennvorgang in mehreren Stufen stattfindet, lässt sich nach Durchführen eines ersten Trennvorganges, in einer zweiten Abscheidestufe eine weitere Feinabtrennung durchführen, so dass ein betreffender Flüssigkeitsanteil, wie ionische Flüssigkeit, in für die Verwendung erforderlicher Reinheit wieder für die Verdichtung zur Verfügung steht und die hierbei erhaltene gasförmige Phase als Endprodukt frei von dieser flüssigen Phase respektive diesem Flüssigkeitsanteil ist.

Neben solchen lonenverdichtern sind wie bereits erwähnt auch Kolbenkompressoren im Einsatz und vergleichbar zu diesen Schraubenkompressoren sowie Membrankompressoren, die jeweils auch mehrstufig ausgelegt sein können. Anschließend wird das seitens des jeweiligen Kompressors erhaltene komprimierte, gashaltige Prozessfluid einer Wärmetausch- oder Kühleinrichtung zugeführt. Dabei geht die jeweilige gasförmige Phase des Prozessfluides, insbesondere diejenige mit dem niedrigsten Siedepunkt, unmittelbar in die flüssige Phase über, die unter Einsatz einer zusätzlichen, in Fluidströmungsrichtung gesehen nachfolgenden Abscheideeinrichtung unter Verwendung eines Demisters und eines sich anschließenden Koaleszers vom Prozessfluid abgetrennt und dergestalt von der gasförmigen Phase in Form eines Prozessgases separiert wird. Dabei erfolgt in der Praxis regelmä-ßig die Kühlung in einem eigenständigen Druckbehälter, der von der eigentlichen Flüssigkeitsabtrennung in einem weiteren Druckbehälter räumlich getrennt ist. Der Einsatz von zwei Druckbehältern benötigt regelmäßig viel Bau- oder Aufstellraum und generiert entsprechend hohe Kosten.

Ausgehend von diesem Stand der Technik liegt der Erfindung die Aufgabe zugrunde unter Beibehalten der Vorteile der bekannten Lösungen, nämlich unter anderem eine gute Phasenauftrennung zwischen flüssigen und gasförmigen Anteilen eines gashaltigen oder gasförmigen Prozessfluides bei hoher Prozesssicherheit durchzuführen, diese dahingehend weiter zu verbessern, dass ein platzsparender und kostengünstiger Aufbau gewährleistet ist.

Eine dahingehende Aufgabe löst eine Vorrichtung mit den Merkmalen des Patentanspruches 1 in seiner Gesamtheit. Dadurch, dass gemäß dem kennzeichnenden Teil des Patentanspruches 1 die Wärmetauscheinrichtung und die Abscheideeinrichtung gemeinsam in einem Vorrichtungsgehäuse in der Art eines Druckbehälters angeordnet sind, das voneinander getrennte Anschlussstellen aufweist für die
- Zufuhr des Prozessfluids,
- Abfuhr der gasförmigen Phase,
- Abfuhr der flüssigen Phase sowie
- Zu- und Abfuhr eines Wärmetauschmediums für die Wärmetauscheinrichtung,
ist die Wärmebehandlung des Prozessfluids, insbesondere in Form einer Kühlung, und eine Flüssigkeitsabtrennung vom gashaltigen oder gasförmigen Prozessfluid mittels der Abscheideeinrichtung in einem gemeinsamen Vorrichtungsgehäuse platzsparend zusammengefasst, das insbesondere in der Art eines Druckbehälters konzipiert ist und demgemäß auch hohen Prozessdrücken standhalten kann. Mit der erfindungsgemäßen Vorrichtungslösung lassen sich prozesssicher und kontinuierlich hohe Ausstoßraten von Prozessgas als der gasförmigen Phase aus dem eingebrachten Prozessfluid während des Betriebs erhalten. Dabei stellt das Prozessgas das erwünschte Endprodukt und der Flüssigkeitsanteil ein Nebenprodukt der dahingehenden Auftrennvorrichtung dar. Druckbehälter sind häufig massiv aus Stahlwerkstoffen aufgebaut und unterliegen der Druckgeräterichtlinie. Die Einsparung eines Druckbehälters bringt demgemäß eine hohe Kostenersparnis mit sich. Das gasförmige Prozessfluid kann auch ausschließlich aus einem Gas oder Gasgemischen bestehen.

Bei einer bevorzugten Ausführungsform der erfindungsgemäßen Vorrichtung ist vorgesehen, dass die Wärmetauscheinrichtung als Kühleinrichtung konzipiert ist, deren jeweiliger Kühlkörper von einem Kühlmittel als dem Wärmetauschmedium durchströmt ist, das über die Zu- und Abfuhr im Vorrichtungsgehäuse ein- und ausbringbar ist. Im Rahmen der Kühlung des Prozessfluides geht dabei die jeweilige gasförmige Phase, insbesondere diejenige mit dem niedrigsten Siedepunkt, unmittelbar in die flüssige Phase über, die insoweit anschließend von der gasförmigen Phase mittels der Abscheideeinrichtung separierbar ist. Das Kühlmedium, beispielsweise in Form einer Wasser-Glykol-Mischung wird außerhalb des Vorrichtungsgehäuses auf niedrige Temperaturen gebracht und in einem eigenständigen Kühlmittelkreislauf die Kühlenergie in das Innere des Vorrichtungsgehäuses mit dem zugeführten Prozessfluid zeitnah eingebracht, so dass bereits eingangsseitig die flüssige Phase respektive der Flüssigkeitsanteil aus dem gashaltigen Prozessfluid abgetrennt wird. Für den Erhalt eines geschlossenen Kühlkreislaufes können hintereinander durchströmbare Kühlschlangen, bevorzugt im Inneren des Vorrichtungsgehäuses angeordnet sein. Dabei ist das jeweilige Kühlmedium über die Zu- und Abfuhr im Vorrichtungsgehäuse in Form getrennter Anschlussstellen mittels einer Pumpeneinrichtung, wie einer Hydropumpe, ein- und ausbringbar. Anstelle von Kühlschlangen oder sonstigen Kühlrohren können auch Kühlplatten (cold plates) zum Einsatz kommen, die jeweils von dem Kühlmedium versorgt sind.

Bei einer weiteren bevorzugten Ausführungsform der erfindungsgemäßen Vorrichtung weist die Abscheideeinrichtung mindestens eine, vorzugsweise zwei Abscheidestufen auf. Vorzugsweise ist dabei die eine Abscheidestufe aus einem Demister und die in Strömungsrichtung des Fluids gesehen nachfolgende Abscheidestufe ein Koaleszer. Der Demister kann dabei bevorzugt der Abtrennung von größeren Tropfen aus dem Prozessfluid dienen, wohingegen der Koaleszer bevorzugt der Abscheidung von feinsten Aerosolen dient.

Bei einer bevorzugten Ausführungsform der erfindungsgemäßen Vorrichtung ist dabei vorgesehen, dass der Koaleszer eine Vielzahl von einzelnen Koaleszerelementen aufweist, die sich mit ihren Längsachsen parallel zueinander verlaufend zwischen zwei Aufnahmeplatten erstrecken, von denen die eine Aufnahmeplatte den fußseitigen Bereich und die andere Aufnahme den kopfseitigen Bereich der Koaleszerelemente derart aufnimmt, dass die Koaleszerelemente von innen nach außen mit Prozessfluid durchströmbar sind. Sofern die einzelnen Koaleszerelemente nach Standard aufgebaut sind, lassen sich diese in großer Anzahl als Wiederholteile kostengünstig erhalten. Des Weiteren können die Koaleszerelemente von ihrem Wirkverhalten her sich unterscheiden, so dass der damit aufgebaute Koaleszer sich für eine Vielzahl von Anwendungsfällen bereitstellen lässt.

Bei einer weiteren bevorzugten Ausführungsform der erfindungsgemäßen Vorrichtung ist dabei vorgesehen, dass die eine Aufnahmeplatte eine Vielzahl von Durchlassöffnungen aufweist, die mit hülsenförmigen Schiebeführungen versehen sind, auf denen jeweils zuordenbar eine Dichteinrichtung eines Koaleszerelementes verschiebbar geführt ist, die Teil einer fußseitigen Endkappe dieses Koaleszerelementes ist. Dergestalt ist zumindest im Rahmen eines Toleranzausgleiches eine zwanglose Anpassung unterschiedlich langer Koaleszerelemente für einen Koaleszer mit zwei Aufnahmeplatten erreicht.

Vorzugsweise ist dabei weiter vorgesehen, dass die andere Aufnahmeplatte mit Ausnehmungen versehen ist, die jeweils koaxial zu einer gegenüberliegend angeordneten Durchlassöffnung in der einen Aufnahmeplatte verlaufen und die dem zumindest teilweisen Durchgriff einer geschlossen ausgeführten, kopfseitigen Endkappe eines jeden Koaleszerelementes dienen. Des Weiteren ist bevorzugt vorgesehen, dass die fußseitige Aufnahmeplatte als Festlager im Innern des Vorrichtungsgehäuses ausgebildet ist und dass die kopfseitige Aufnahmeplatte als Loslager im Innern des Vorrichtungsgehäuses längsverschiebbar geführt ist. Aufgrund der Fest- und Loslagercharakteristik für die Aufnahmeplatten des Koaleszers lässt sich in vereinfachter Weise ein Zusammenbau für den Koaleszer erreichen, bei dem von der einen freien Stirnseite des Vorrichtungsgehäuses aus, vor Schließen desselben mittels einer Flanschplatte, sich die Koaleszerelemente zwanglos einstapeln und im Bedarfsfall auch gegen Neuelemente tauschen lassen.

Bei einer weiteren besonders bevorzugten Ausführungsform der erfindungsgemäßen Vorrichtung ist dabei vorgesehen, dass über ein Koppelstück zwischen einer stirnseitigen Flanschplatte des Vorrichtungsgehäuses und der längsverschiebbaren kopfseitigen Aufnahmeplatte mit zunehmendem Festlegen dieser Flanschplatte am Vorrichtungsgehäuse eine hierüber ausgeübte Festlegekraft über das Koppelteil auf die kopfseitige Aufnahmeplatte ausgeübt ist, die die Koaleszerelemente gleichzeitig mit ihrer jeweiligen fußseitigen Endkappe auf dem Schiebsitz der fußseitigen Aufnahmeplatte zumindest in radialer Position halten. Dergestalt lassen sich in konstruktiv einfacher Weise von zentraler Stelle aus über das Koppelstück unter Einsatz der festzulegenden Flanschplatte sich die einzelnen Koaleszerelemente entlang ihrer jeweiligen Fußseite über die Schiebeführungen an der stationären Aufnahmeplatte festlegen und insbesondere im Betrieb in radialer Position abstützen.

Bei einer weiteren bevorzugten Ausführungsform der erfindungsgemäßen Vorrichtung ist dabei vorgesehen, dass der Demister sich mit seinem tropfen- und/oder aerosolabscheidenden Wirkmedium an einer Anlageplatte mit Fluid-Durchlassstellen abstützt, die im Innern des Vorrichtungsgehäuses stationär angeordnet ist und die der fußseitigen, stationär im Innern des Ventilgehäuses angeordneten Aufnahmeplatte des Koaleszers benachbart gegenüberliegt. Während sich demgemäß der Koaleszer von der einen freien Stirnseite des Vorrichtungsgehäuses einbringen lässt, besteht in bauraumsparender Weise die als montagegünstig anzusehende Lösung darin den Demister von der anderen, gegenüberliegenden freien Stirnseite des Vorrichtungsgehäuses in dieses einzubringen.

Bei einer bevorzugten Ausführungsform der erfindungsgemäßen Vorrichtung ist dabei weiter vorgesehen, dass das Wirkmedium des Demisters ein Gestrick, Gewirk oder Gewebe aufweist, das sich mit seiner einen Seite, vorzugsweise vollflächig, an der stationären Anlageplatte abstützt, die einzelne Durchgriffselemente aufweist, insbesondere in Form von vorstehenden Durchgriffsstäben, die das Wirkmedium durchgreifen und die auf ihrer jeweils freien Seite mit einzelnen Halteelementen versehen auf die freie Oberseite des Wirkmediums in festlegender Weise einwirken. Dergestalt kann das bevorzugt aus einem Gestrick, Gewirk oder Gewebe gebildete Wirkmedium des Demisters in einem vorgebbaren Toleranzbereich beliebig groß aufbauen, da durch entsprechende Ausgestaltungen der Durchgriffselemente respektive Durchgriffsstäbe sich diese verschiedenen Größen von Wirkmedien nebst deren gewähltem Aufbau sicher an der Anlageplatte festlegen lassen. Die Durchgriffsstäbe selbst behindern dabei nur in sehr geringem Umfang den freien Durchfluss des Demister-Wirkmediums.

Bei einer besonders bevorzugten Ausführungsform der erfindungsgemäßen Vorrichtung ist vorgesehen, dass die Wärmetauscheinrichtung und die Abscheideeinrichtung das Vorrichtungsgehäuse in zwei Funktionsbereiche unterteilen, von denen jeder mindestens einen Ablauf, vorzugsweise bodenseitig im Vorrichtungsgehäuse angeordnet, als weitere Anschlussstelle im Vorrichtungsgehäuse zur Abfuhr einer flüssigen Phase aufweist. Vorzugsweise ist dabei weiter vorgesehen, dass der Funktionsbereich mit der Abscheideeinrichtung, vorzugsweise im Bereich des Koaleszers, die zusätzliche Anschlussstelle, vorzugsweise im deckenseitigen Bereich des Vorrichtungsgehäuses angeordnet, für die Abfuhr der gasförmigen Phase aufweist. Dergestalt kann schwerkraftunterstützt die Abfuhr der Flüssigkeitsanteile aus dem gashaltigen Prozessfluid über die bodenseitigen Abläufe im Vorrichtungsgehäuse erfolgen, wohingegen die gasförmigen Bestandteile mit eigener Strömungsführung und aufsteigend über Deckenauslässe des Vorrichtungsgehäuses als End- oder Reinprodukt für die weitere Verwendung ausgebracht werden.

Besonders bevorzugt ist dabei vorgesehen, dass das als Druckbehälter konzipierte Vorrichtungsgehäuse mit seinen beiden Funktionsbereichen im Betrieb eine liegende, vorzugsweise horizontale, Ausrichtung einnimmt und dass sowohl der Demister als auch der Koaleszer als zylindrische, koaxial zueinander angeordnete Funktionseinheiten zumindest teilweise bündig in Hintereinanderanordnung im hohlzylindrischen Vorrichtungsgehäuse aufgenommen sind. Eine liegende Anordnung erlaubt darüber hinaus ein vergleichmäßigtes Anströmen von allen Komponenten der Vorrichtung in Form der Kühleinrichtung, des Demisters sowie des Koaleszers. Es versteht sich, dass sofern diese Wirkkomponenten der Vorrichtung nur als einmal vorhanden angegeben sind, diese auch in mehrfacher Anordnung, vorzugsweise in Hintereinanderanordnung, innerhalb des Druckbehälters vorhanden sein können.

Im Folgenden wird die erfindungsgemäße Vorrichtung anhand eines Ausführungsbeispiels nach der Zeichnung näher erläutert. Dabei zeigen in prinzipieller und nicht maßstäblicher Darstellung die
- Fig. 1: in der Art eines Längsschnittes und in stark vereinfachter Form, die Vorrichtung als Ganzes mit ihren einzelnen Anschlussstellen sowie ihren Wirkkomponenten Kühler, Demister und Koaleszer; und
- Fig. 2: in der Art eines Längsschnitts die fußseitige Aufnahme eines Koaleszerelementes des in Fig. 1 zum Einsatz kommenden Koaleszers.

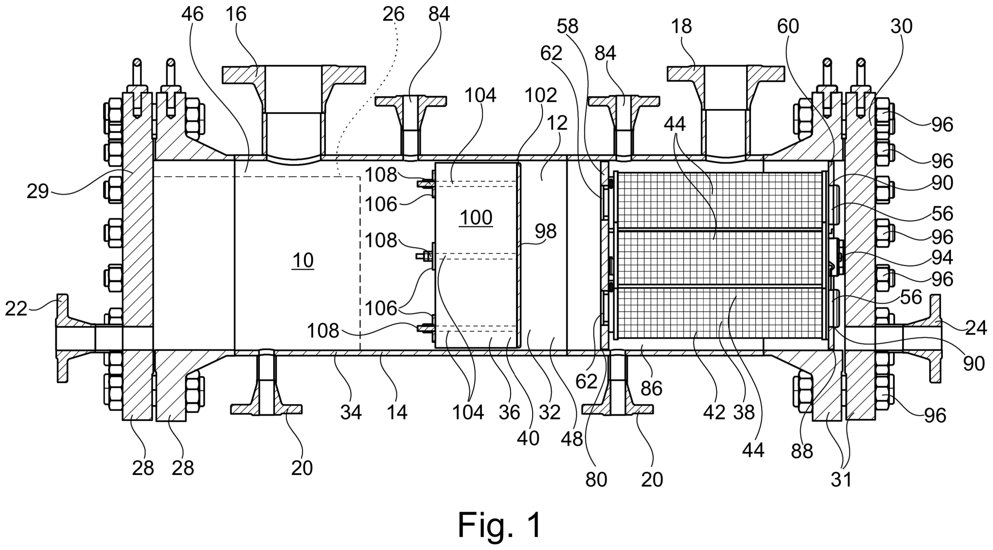

Die Längsschnittdarstellung nach der Fig. 1 zeigt eine Vorrichtung zur Behandlung von gashaltigen oder gasförmigen Prozessfluiden, die nach ihrer Verdichtung einer Wärmetauscheinrichtung, wie einer Kühleinrichtung 10, zugeführt werden, die das jeweilige Prozessfluid zumindest teilweise in eine flüssige Phase überführt und mit einer sich in Strömungsrichtung des Fluids gesehen anschließenden Abscheideeinrichtung 12, die die flüssige Phase aus dem Prozessfluid derart entfernt, dass eine gasförmige Phase verbleibt. Die Prozessfluide, die auch ausschließlich nur Gase umfassen können, wie Wasserstoff, Stickstoff, Sauerstoff, Helium, Argon, Edelgase, Chlor, CO2, Ammoniak, Erdgas sowie Gasgemische aus kurzkettigen Kohlenwasserstoffverbindungen etc., werden mittels Kolbenkompressoren einschließlich lonenverdichtern sowie Schraubenkompressoren und Membrankompressoren in üblicher Weise verdichtet.

Die Erhöhung des Druckes liegt bei Schraubenkompressoren dabei in der Regel bei ca. 40 bar pro Kompressorstufe. Die Erhöhung des Druckes liegt bei Kolbenkompressoren hingegen in der Regel über 30 bar bis zu mehreren 100 bar pro Kompressorstufe. Der Druck innerhalb der Vorrichtung mit der Kühleinrichtung 10 und der Abscheideeinrichtung 12 kann insoweit also im einstelligen Bereich bei wenigen bar bis zu 1000 bar und mehr, je nach Anwendung, liegen. Die Temperatur des gashaltigen Prozessfluides respektive des Gases oder Gasgemisches kann bei Eintritt in die Vorrichtung bei ca. 140°C liegen und mit Austritt bei ca. 50°C.

Wie sich weiter aus der Figur ergibt, ist die Wärmetauscheinrichtung 10 und die Abscheideeinrichtung 12 gemeinsam in einem Vorrichtungsgehäuse 14 in der Art eines Druckbehälters angeordnet, das voneinander getrennte Anschlussstellen 16, 18, 20, 22, 24 aufweist für die
- Zufuhr 16 des Prozessfluids,
- Abfuhr 18 der gasförmigen Phase,
- Abfuhr 20 der flüssigen Phase sowie
- Zu- und Abfuhr 22 eines Wärmetauschmediums für die Wärmetauscheinrichtung in Form der Kühleinrichtung 10.

Die Kühleinrichtung 10 weist mindestens einen Kühlkörper 26 auf, der in verschiedenster Ausgestaltung in der Art einer Blackbox dargestellt ist und der beispielsweise in Form von Kühlrohren oder Kühlschlangen ausgebildet ist, die von einem Kühlmittel als dem Wärmetauschmedium durchströmbar sind, das über die Zu- und Abfuhr 22 im Vorrichtungsgehäuse 14 ein- und ausbringbar ist. Das Kühlmedium, beispielsweise in Form einer Wasser-Glykol-Mischung, wird außerhalb des Vorrichtungsgehäuses 14 auf niedrige Temperaturen gebracht und in einem eigenständigen Kühlmittelkreislauf (nicht dargestellt) die Kühlenergie in das Innere 32 des Vorrichtungsgehäuses 14 mit dem zugeführten gashaltigen oder gasförmigen Prozessfluid zeitnah eingebracht. Die gemeinsame Zufuhr sowie die Abfuhr 22 des Kühlmediums erfolgt über mindestens einen Durchlass in einer massiv ausgebildeten plattenförmigen Flanschverbindung 28 unter Einbezug einer Flanschplatte 29, die das Vorrichtungsgehäuse 14 auf seiner einen freien Stirnseite hermetisch verschließt. Ebenso ist das als Druckbehälter konzipierte Vorrichtungsgehäuse 14 auf seiner gegenüberliegenden Stirnseite von einem plattenförmigen Abschlussteil 30, in der Art einer Flanschplatte, einer Flanschverbindung 31 druckdicht verschlossen. Alle Anschlussstellen 16, 18, 20, 22 sind als Anschlussrohre ausgebildet, die zumindest teilweise mit unterschiedlichen Anschlussweiten an das Vorrichtungsgehäuse 10 medien- oder fluidführend angeschlossen sind. Ferner sind die Anschlussrohre für die Zu- und Abfuhr der diversen Medien an eine Verrohrung (nicht dargestellt) in üblicher Weise angeschlossen. Ferner weist die rechte Flanschplatte 30 bodenseitig einen zusätzlichen Fluidablauf 24 auf, beispielsweise für die Abfuhr von im Prozess abgeschiedenen Wassers.

Des Weiteren weist das Vorrichtungsgehäuse 14 als Komponente des Druckbehälters einen hohlzylindrischen, druckstabilen Gehäusemantel 34 auf, der insbesondere aus einem Stahlwerkstoff besteht und an dem die einzelnen rohrförmigen Anschlussstellen 16, 18, 20, 22, 24 sowie ein Teil der Flanschverbindung 28 angeschweißt sind. Die Zufuhr des Prozessfluides, insbesondere in Form eines Gases, über die obere Anschlussstelle 16 erfolgt bevorzugt senkrecht zu der Erstreckung der einzelnen Kühlelemente des Kühlkörpers 26, die sich im Wesentlichen horizontal im Innern 32 des Vorrichtungsgehäuses 10 erstrecken können und dabei die Anschlussstelle 16 unter Einhalten eines Abstandes derart übergreifen, dass die Anschlussstelle 16 in etwa mittig im Zufuhrbereich zur Längserstreckung der Kühleinrichtung 10 ausmündet (nicht dargestellt).

Die Abscheideeinrichtung 12 weist zwei einzelne Abscheidestufen 36, 38 auf, wobei die eine Abscheidestufe 36 aus einem Demister 40 und die in Strömungsrichtung des Fluids respektive des Gases gesehen nachfolgende Abscheidestufe 38 ein Koaleszer 42 ist, der aus einer Vielzahl von einzelnen Koaleszerelementen 44 besteht, die vorzugsweise mit gleicher Einbaulänge sich in axialer Richtung parallel zur Längsausrichtung des Vorrichtungsgehäuses 14 in dessen Innenraum 32 erstrecken. Während der zylindrische Demister 40 außenumfangsseitig bündig an der Innenwand des Gehäusemantels 34 abschließt, nimmt der Koaleszer 42 mit seinen einzelnen Koaleszerelementen 44 einen radialen Abstand hierzu ein. Die Wärmetauscheinrichtung in Form der Kühleinrichtung 10 und die Abscheideeinrichtung 12 unterteilen das Vorrichtungsgehäuse 14 insoweit in zwei koaxial zueinander angeordnete Funktionsbereiche 46, 48, von denen jeder mindestens einen, vorzugsweise bodenseitig im Vorrichtungsgehäuse angeordneten, Ablauf als weiterer Anschlussstelle 20 im Vorrichtungsgehäuse 14 zur Abfuhr der abgetrennten flüssigen Phase aufweist. Demgegenüber weist der Funktionsbereich 48 mit der Abscheideeinrichtung 12, vorzugsweise im Bereich des Koaleszers 42, die zusätzliche Anschlussstelle 18 für die Abfuhr der gasförmigen Phase aus dem Vorrichtungsgehäuse 14 als dem Endprodukt auf. Dabei ist die dahingehende Anschlussstelle 18 im deckenseitigen Bereich des Vorrichtungsgehäuses 14 angeordnet und durchgreift insoweit vergleichbar den anderen Anschlussstellen 16, 20, 22, 24 den Gehäusemantel 34.

Des Weiteren nimmt das als Druckbehälter konzipierte Vorrichtungsgehäuse 14 mit seinen beiden Funktionsbereichen 46, 48 im Betrieb eine liegende, horizontale Ausrichtung ein, wie dargestellt. Der Demister 40 oder auch Tropfenabscheider genannt, besteht regelmäßig aus einem Drahtgestrick und der Abscheidemechanismus an sich beruht hauptsächlich auf dem Trägheitseffekt. Insbesondere dient der Demister 40 dazu, möglichst große Tropfen aus dem Prozessfluid als flüssige Phase abzuscheiden.

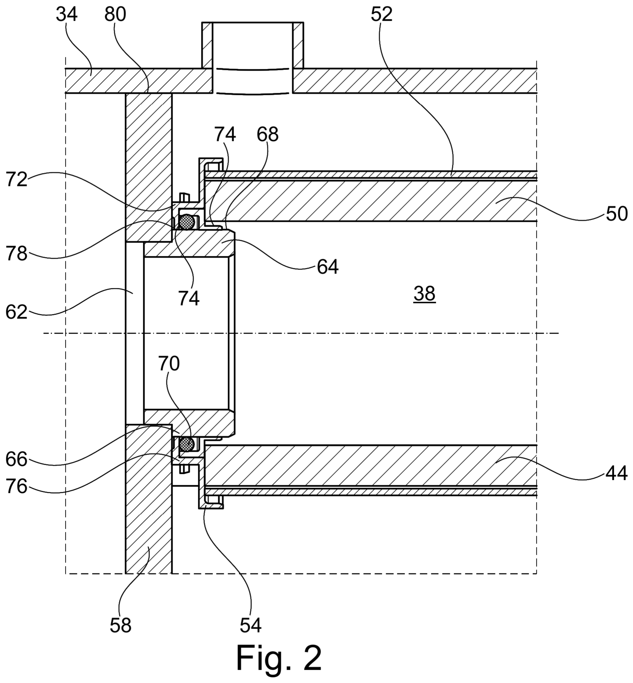

Ein Koaleszerelement 44, wie es beispielhaft in Mehrfachanordnung für den Koaleszer 42 verwendet wird, kann neben üblichen Filtermaterialien, beispielsweise in Form eines sogenannten Meshpacks zusätzlich oder alternativ auch Drainage- oder Koaleszerlagen 50 (s. Fig. 2) aufweisen, die wiederum eine Vergrößerung des Tropfenvolumens bewirken, was eine verbesserte schwerkraftunterstützte Abscheidung für die flüssige Phase ergibt, die bodenseitig über die Abfuhr 20 aus dem Vorrichtungsgehäuse 14 im Bereich des Koaleszers 42 herausgeführt ist. Ferner sind die dahingehenden Lagen 50 von einem Stützmantel 52 mit rechteckförmigen, insbesondere quadratischen, Durchlassstellen umfasst. Ferner erstrecken sich die Lagen 50 mit dem Stützmantel 52 für jedes Element 44 zwischen einer fußseitigen Endkappe 54 und einer kopfseitigen Endkappe 56. Insoweit ist der Koaleszer 42 besonders geeignet auch feinste Aerosole aus dem gashaltigen oder gasförmigen Prozessfluid als flüssige Phase abzuscheiden. Da die in der Fig. 1 gezeigte Abscheidevorrichtung als Ganzes flüssige Anteile aus Prozessgasen und gashaltigen Prozessfluiden abtrennt, kann die Vorrichtung auch als eine Art Trocknereinrichtung für Gase eingesetzt werden. In jedem Fall sind alle Wirkkomponenten, wie Kühler 10, Demister 40 und Koaleszer 42, in einem Druckbehälter gemeinsam untergebracht, was so keine Entsprechung im Stand der Technik hat.

Der Koaleszer 42 weist im vorliegenden Fall insgesamt vier einzelne Koaleszerelemente 44 auf, die sich einander diametral gegenüberliegend um die Längsachse des Vorrichtungsgehäuses 14 herumgruppieren. Ferner erstrecken sich die vier Koaleszerelemente 44 mit gleicher oder im Wesentlichen gleicher axialer Baulänge zwischen zwei Aufnahmeplatten 58, 60, von denen die eine Aufnahmeplatte 58 den fußseitigen Bereich und die andere Aufnahmeplatte 60 den kopfseitigen Bereich der Koaleszerelemente 44 derart aufnimmt, dass diese von innen nach außen mit Prozessfluid durchströmbar sind. Der einfacheren Darstellung wegen wurde in der Fig. 2 anstelle der vier Koaleszerelemente 44 nur ein einzelnes Koaleszerelement 44 gezeigt, wie es in Blickrichtung auf die Fig. 1 gesehen ganz oben im Vorrichtungsgehäuse 14 liegt, wohingegen das zuvorderst angeordnete Koaleszerelement 44 weggelassen wurde. Die eine fußseitige Aufnahmeplatte 58 weist eine Vielzahl von Durchlassöffnungen 62 auf, wobei im Hinblick auf die vier zum Einsatz kommenden Koaleszerelemente 44 auch vier Durchlassöffnungen 62 vorhanden sind, von denen in der Fig. 2 nur eine einzelne exemplarisch dargestellt ist.

Jede Durchlassöffnung 62 weist eine hülsenförmige Schiebeführung 64 auf, die jeweils über einen nach innen vorspringenden Absatz 66 in die kreiszylindrische, zuordenbare Durchlassöffnung 62 bündig eingesetzt ist und die gemäß der Darstellung nach der Fig. 2 nicht gänzlich in die Durchlassöffnung 62 vonseiten ihres im Durchmesser verringerten Außenumfangs hineinragt. Des Weiteren weist die hohlzylindrische Schiebeführung 64 außenumfangsseitig und oberhalb des Absatzes 66 eine hohlzylindrische Außenwand 68 mit durchgehend gleichem Durchmesser auf, die außenumfangsseitig von einer Dichteinrichtung 70 in Form eines O-Dichtringes umfasst ist.

Die dahingehende Dichteinrichtung 70 respektive der O-Dichtring ist in einer Ringaufnahme 72 gekammert, die mehrteilig ausgebildet und zusammengefasst das fußseitige Ende der Endkappe 54 bildet, das in Richtung der Aufnahmeplatte 58 stutzenartig vorsteht. Teile der Ringaufnahme 72, die die Dichteinrichtung 70 nach außen hin kammern, bilden gleichzeitig konzentrische Anlageflächen miteinander aus, die zumindest teilweise dafür vorgesehen sind, dass die fußseitige Endkappe 54 zusammen mit dem jeweils zugehörigen Koaleszerelement 44 sich auf der Schiebeführung 64 axial bewegen kann und dabei mittels der Dichteinrichtung 70 abgedichtet ist. Darüber hinaus garantiert die jeweilige Anlagefläche in Verbindung mit dem O-Dichtring eine Abstützung des Koaleszerelementes 44 auf der Schiebeführung 64 und zwar quer zur möglichen Verfahrbewegung entlang der Längsachse dieser Schiebeführung, wobei in der Fig. 2 das freie stirnseitige Ende der fußseitigen Endkappe 54 in Anlage mit der benachbarten, ebenen Stirnfläche der Aufnahmeplatte 58 ist.

Es versteht sich, dass vor dem Festlegen der Koaleszerelemente 44 des Koaleszers 42 der freie stirnseitige Endbereich der Endkappe 54 einen axialen Abstand zu der benachbarten Fläche der fußseitigen Aufnahme in Form der Aufnahmeplatte 58 aufweisen kann, und dass nach erfolgtem Festlegen der dahingehend axiale Abstand gemäß der Darstellung nach der Fig. 2 beseitigt ist. Um etwaige Überbestimmungen zu vermeiden, weist hierfür das Endkappenteil 76, welches den O-Dichtring 70 in Richtung der Aufnahmeplatte 58 kammert, innenumfangsseitig eine ringförmige Radialausnehmung 78 auf.

Die fußseitige Aufnahmeplatte 58 ist in der Art eines Festlagers mittels einer Schweißverbindung 80 entlang ihres kreisrunden Außenumfanges auf der benachbarten Innenumfangsseite respektive im Innern 32 des Vorrichtungsgehäuses 14 stationär festgelegt. Des Weiteren weist das Vorrichtungsgehäuse 14 in Blickrichtung auf die Fig. 1 gesehen auf ihrer Oberseite parallel zu den Längsausnehmungen von Anschlussstelle 18 sowie von Anschlussstelle 20 zwei rohr- oder flanschartige Durchbrüche 84 auf, die dem Durchgriff von nicht dargestellten Sensoren dienen können, wie beispielsweise Druck-, Temperatur- und/oder Feuchte-Sensoren etc., wobei der Sensor-Eingriff 84 für den Koaleszer 42 in dessen Koaleszerraum 86 innerhalb des Vorrichtungsgehäuses 14 vorgesehen ist.

Auf der anderen gegenüberliegenden Seite des Koaleszers 42 ist als eine Art Loslager die kopfseitige Aufnahmeplatte 60 angeordnet, die im Innern 32 des Vorrichtungsgehäuses 14 auf dessen Innenumfangsseite längsverfahrbar mit einem vorgebbaren radialen Ringspalt 88 geführt ist. Des Weiteren kann sich die kopfseitige Aufnahmeplatte 60 bei aufgenommenem Koaleszer 42 in dem Raum 86 bewegen, der begrenzt ist durch Anlageflächen an den kopfseitigen Endkappen 56, die kreisrunde Ausnehmungen 90 in der Aufnahmeplatte 60 durchgreifen, sowie einem freien stirnseitigen Öffnungsende 42 des Gehäuses 14, welches mittels der zweiten Flanschplatte 30 verschließbar ist. Über ein vorzugsweise zylindrisch ausgebildetes, massives Koppelstück 94, welches an zentraler Stelle zwischen den Koaleszerelementen 44 entlang der Längsachse des Koaleszers 42 mittig auf der kopfseitigen Aufnahmeplatte 60 in Richtung der Flanschplatte 30 aufsitzt, lässt sich beim dahingehenden Festlegen der zweiten Flanschplatte 30 auf der freien Stirnseite des Vorrichtungsgehäuses 14, mittels der einzelnen Schraubverbindungen 96 unter Bilden der weiteren dichten Flanschverbindung 31, in axialer Verfahrrichtung gesehen das scheibenartige Koppelstück 94 derart mitnehmen, dass insgesamt der Koaleszer 42 mit seinen Koaleszerelementen 44 in Blickrichtung auf die Fig. 1 gesehen von rechts nach links verfahren wird, bis die fußseitigen Endkappen 54 der Koaleszerelemente 44 gegen die fußseitige Aufnahmeplatte 58 gedrückt werden, so dass sich eine abgedichtete Sitzaufnahme mittels der Dichteinrichtung 70 gemäß der Darstellung nach der Fig. 2 ergibt. In umgekehrter Reihenfolge lassen sich die einzelne Koaleszerelemente 44 dann wiederum von ihrer Schiebeführung 64 in der fußseitigen Aufnahmeplatte 58 lösen und für einen Tausch- oder Ersatzvorgang durch entsprechende Neuelemente ersetzen. Dergestalt ist der Koaleszerraum 86 als zweite Abscheidestufe 38 gegenüber der ersten Abscheidestufe 36 mit dem Demister 40 als Funktionsbereich separiert und der Fluidfluss erfolgt vonseiten des Ausgangs 98 des Demisters 40 über die Durchlassöffnungen 62 auf der Innenseite der Koaleszerelemente 44 für deren Durchströmung von innen nach außen in Richtung der Anschlussstelle 18 für die Abfuhr der gasförmigen Phase aus dem Prozessfluid.

Wie sich insbesondere aus der Fig. 1 ergibt, stützt sich der Demister 40 mit seinem tropfen- und/oder aerosolabscheidenden Wirkmedium 100 an einer Anlageplatte 102 ab, die als Ausgang 98 mit Fluiddurchlassstellen versehen ist. Hierfür ist die Anlageplatte 102 mit vier Viertelsegmenten (nicht dargestellt) als freiem Durchströmungsquerschnitt versehen, die mit einem Lochgitter überdeckt den fluidführenden Ausgang 98 des Demisters 40 bilden. Die Anlageplatte 102 ist vergleichbar der fußseitigen Aufnahmeplatte 58 im Innern 32 des Vorrichtungsgehäuses 14 festgelegt, insbesondere festgeschweißt. Dergestalt ist der Demister 40 als Ganzes stationär innerhalb des Vorrichtungsgehäuses 14, wie in Fig. 1 dargestellt, festgelegt. Das Wirkmedium 100 des Demisters 40 besteht bevorzugt aus einem Drahtgestrick, das sich in Blickrichtung auf die Fig. 1 gesehen mit seiner rechten Seite, vorzugsweise vollflächig, an der stationären Anlageplatte 102 abstützt, die parallel zu den Aufnahmeplatten 58, 60 angeordnet ist.

Die Anlageplatte 102 weist des Weiteren einzelne Durchgriffselemente, insbesondere in Form von senkrecht auf ihr vorstehenden Durchgriffsstäben 104 auf, die das "löchrige" Wirkmedium 100 durchgreifen und die auf ihrer jeweils freien Seite in Richtung der ersten Flanschplatte 29 mit einzelnen Haltelementen 106 versehen sind, insbesondere in Form von Halteplatten, die auf die freie Oberseite des Wirkmediums 100 in festlegender Weise einwirken. Hierfür lassen sich die jeweiligen Halteelemente 106 über eine Gewindestrecke 108 jeweils am freien Ende eines Durchgriffsstabes 104 festlegen, mit der Möglichkeit den freien Abstand zwischen dem jeweiligen Halteelement 106 und Teilen der Anlageplatte 102 zu verändern, um dergestalt das dazwischenliegende Paket des Wirkmediums 100 entsprechend klemmend festlegen zu können. Der dahingehend aufbauende Demister 40 lässt sich als Paket, wie in Fig. 1 dargestellt, von der linken Seite her bei geöffneter Flanschverbindung 28 in das Innere 32 des Vorrichtungsgehäuses 14 einpassen und dort mittels der genannten Schweißverbindung, vorzugsweise hergestellt über den rückwärtigen Bereich mit der Flanschverbindung 31, festlegen. Eine Montage in Einzelschritten ist jedoch gleichfalls möglich. Dabei mündet die freie vordere Stirnseite des Demisters 40 in Richtung der ersten Flanschplatte 29 hinter einer Sensor-Eingriff-Durchbruchstelle 84 aus.

Das als Druckbehälter konzipierte Vorrichtungsgehäuse 14 mit seinen beiden Funktionsbereichen 46, 48 nimmt im Betrieb, wie dargestellt, eine liegende horizontale Ausrichtung ein, wobei sowohl der Demister 40 als auch der Koaleszer 42 als zylindrische, koaxial zueinander angeordnete Funktionseinheiten zumindest teilweise bündig in Hintereinanderanordnung unter Einhalten eines vorgebbaren Abstandes im hohlzylindrischen Vorrichtungsgehäuse 14 aufgenommen sind. Dies hat so keine Entsprechung im Stand der Technik.

## Patentansprüche

1. Vorrichtung zur Behandlung von gashaltigen oder gasförmigen Prozessfluiden, die nach ihrer Verdichtung einer Wärmetauscheinrichtung, wie einer Kühleinrichtung (10), zugeführt werden, die das jeweilige Prozessfluid zumindest teilweise in eine flüssige Phase überführt und mit einer sich in Strömungsrichtung des Fluids gesehen anschließenden Abscheideeinrichtung (12), die die flüssige Phase aus dem Prozessfluid derart entfernt, dass eine gasförmige Phase verbleibt, **dadurch gekennzeichnet, dass** die Wärmetauscheinrichtung (10) und die Abscheideeinrichtung (12) gemeinsam in einem Vorrichtungsgehäuse (14) in der Art eines Druckbehälters angeordnet sind, das voneinander getrennte Anschlussstellen aufweist für die
- Zufuhr (16) des gashaltigen Prozessfluids,
- Abfuhr (18) der gasförmigen Phase,
- Abfuhr (20) der flüssigen Phase sowie
- Zu- und Abfuhr (22) eines Wärmetauschmediums für die Wärmetauscheinrichtung.

2. Vorrichtung nach Anspruch 1, **dadurch gekennzeichnet, dass** die Wärmetauscheinrichtung als Kühleinrichtung (10) konzipiert ist, deren jeweiliger Kühlkörper (26) von einem Kühlmittel als dem Wärmetauschmedium durchströmt ist, das über die Zu- und Abfuhr (22) im Vorrichtungsgehäuse (14) ein- und ausbringbar ist.

3. Vorrichtung nach Anspruch 1 oder 2 **dadurch gekennzeichnet, dass** der jeweilige Kühlkörper (26) im Zufuhrbereich des Prozessfluides liegt, das über die Anschlussstelle (16) in Form eines Einganges in das Vorrichtungsgehäuse (14) einbringbar ist.

4. Vorrichtung nach einem der vorstehenden Ansprüche, **dadurch gekennzeichnet, dass** die Abscheideeinrichtung (12) mindestens eine, vorzugsweise zwei Abscheidestufen (36, 38) aufweist.

5. Vorrichtung nach einem der vorstehenden Ansprüche, **dadurch gekennzeichnet, dass** die eine Abscheidestufe (36) aus einem Demister (40) und die in Strömungsrichtung des Fluids gesehen nachfolgende Abscheidestufe (38) ein Koaleszer (42) ist.

6. Vorrichtung nach einem der vorstehenden Ansprüche, **dadurch gekennzeichnet, dass** der Koaleszer (42) eine Vielzahl von einzelnen Koaleszerelementen (44) aufweist, die sich mit ihren Längsachsen parallel zueinander verlaufend zwischen zwei Aufnahmeplatten (58, 60) erstrecken, von denen die eine Aufnahmeplatte (58) den fußseitigen Bereich und die andere Aufnahmeplatte (60) den kopfseitigen Bereich der Koaleszerelemente (44) derart aufnimmt, dass die Koaleszerelemente (44) von innen nach außen mit Prozessfluid durchströmbar sind.

7. Vorrichtung nach Anspruch 6, **dadurch gekennzeichnet, dass** die eine fußseitige Aufnahmeplatte (58) eine Vielzahl von Durchlassöffnungen (62) aufweist, die mit hülsenförmigen Schiebeführungen (64) versehen sind, auf denen jeweils zuordenbar eine Dichteinrichtung (70) eines Koaleszerelementes (44) verschiebbar geführt ist, die Teil einer fußseitigen Endkappe (54) dieses Koaleszerelementes (44) ist.

8. Vorrichtung nach einem der vorstehenden Ansprüche, **dadurch gekennzeichnet, dass** die andere kopfseitige Aufnahmeplatte (60) mit Ausnehmungen (90) versehen ist, die jeweils koaxial zu einer gegenüberliegend angeordneten Durchlassöffnung (62) in der einen fußseitigen Aufnahmeplatte (58) verlaufen und die dem zumindest teilweisen Durchgriff einer geschlossen ausgeführten, kopfseitigen Endkappe (56) eines jeden Koaleszerelementes (44) dienen.

9. Vorrichtung nach einem der vorstehenden Ansprüche, **dadurch gekennzeichnet, dass** die fußseitige Aufnahmeplatte (58) als Festlager im Innern (32) des Vorrichtungsgehäuses (14) ausgebildet ist und dass die kopfseitige Aufnahmeplatte (60) als Loslager im Innern (32) des Vorrichtungsgehäuses (14) längsverschiebbar geführt ist.

10. Vorrichtung nach einem der vorstehenden Ansprüche, **dadurch gekennzeichnet, dass** über ein Koppelstück (94) zwischen einer stirnseitigen Flanschplatte (30) des Vorrichtungsgehäuses (14) und der längsverschiebbaren kopfseitigen Aufnahmeplatte (60) mit zunehmendem Festlegen dieser Flanschplatte (30) am Vorrichtungsgehäuse (14) eine hierüber ausgeübte Festlegekraft über das Koppelteil (94) auf die kopfseitige Aufnahmeplatte (60) ausgeübt ist, die die Koaleszerelemente (44) gleichzeitig mit ihrer jeweiligen fußseitigen Endkappe (54) auf der Schiebeführung (64) der fußseitigen Aufnahmeplatte (58) zumindest in radialer Position halten.

11. Vorrichtung nach einem der vorstehenden Ansprüche, **dadurch gekennzeichnet, dass** der Demister (40) sich mit seinem tropfen- und/oder aerosolabscheidenden Wirkmedium (100) an einer Anlageplatte (102) mit Fluid-Durchlassstellen abstützt, die im Innern (32) des Vorrichtungsgehäuses (14) stationär angeordnet ist und die der fußseitigen, stationär im Innern (32) des Ventilgehäuses (14) angeordneten Aufnahmeplatte des Koaleszers (44) benachbart gegenüberliegt.

12. Vorrichtung nach einem der vorstehenden Ansprüche, **dadurch gekennzeichnet, dass** das Wirkmedium (100) des Demisters (40) ein Gestrick, Gewirk oder Gewebe aufweist, das sich mit seiner einen Seite, vorzugsweise vollflächig, an der stationären Anlageplatte (102) abstützt, die einzelne Durchgriffselemente aufweist, insbesondere in Form von vorstehenden Durchgriffsstäben (104), die das Wirkmedium (100) durchgreifen und die auf ihrer jeweils freien Seite mit einzelnen Halteelementen (106) versehen auf die freie Oberseite Weise des Wirkmediums (100) in festlegender Weise einwirken.

13. Vorrichtung nach einem der vorstehenden Ansprüche, **dadurch gekennzeichnet, dass** die Wärmetauscheinrichtung und die Abscheideeinrichtung (12) das Vorrichtungsgehäuse (14) in zwei Funktionsbereiche (46, 48) unterteilen, von denen jeder mindestens einen Ablauf, vorzugsweise bodenseitig im Vorrichtungsgehäuse (14) angeordnet, als weitere Anschlussstelle (20) im Vorrichtungsgehäuse (14) zur Abfuhr einer flüssigen Phase aufweist.

14. Vorrichtung nach einem der vorstehenden Ansprüche, **dadurch gekennzeichnet, dass** der Funktionsbereich (48) mit der Abscheideeinrichtung (12), vorzugsweise im Bereich des Koaleszers (42), die zusätzliche Anschlussstelle (18), vorzugsweise im deckenseitigen Bereich des Vorrichtungsgehäuses (14) angeordnet, für die Abfuhr der gasförmigen Phase aufweist.

15. Vorrichtung nach einem der vorstehenden Ansprüche, **dadurch gekennzeichnet, dass** das als Druckbehälter konzipierte Vorrichtungsgehäuse (14) mit seinen beiden Funktionsbereichen (46, 48) im Betrieb eine liegende, horizontale Ausrichtung einnimmt und dass sowohl der Demister (40) als auch der Koaleszer (42) als zylindrische, koaxial zueinander angeordnete Funktionseinheiten zumindest teilweise bündig in Hintereinanderanordnung unter Einhalten eines vorgebbaren Abstandes im hohlzylindrischen Vorrichtungsgehäuse (14) aufgenommen sind.

16. Vorrichtung nach einem der vorstehenden Ansprüche, **dadurch gekennzeichnet, dass** der Demister (40) eine Abtrennung größerer Tropfen, vorzugsweise größer als 5 µm, als Teil der flüssigen Phase ermöglicht und bevorzugt dabei einen Flüssigkeitsdurchbruch in Richtung des Koaleszers (42) verhindert.

17. Vorrichtung nach einem der vorstehenden Ansprüche, **dadurch gekennzeichnet, dass** der Koaleszer (42), insbesondere der Abscheidung von feinsten Aerosolen, vorzugsweise mit einer Tröpfchengröße kleiner 5 µm, als Teil der flüssigen Phase dient.
